Europäisches Patentamt

European Patent Office

Office européen des brevets

(19)

(11) Veröffentlichungsnummer: **0 028 298**
**B1**

(12)

# EUROPÄISCHE PATENTSCHRIFT

(45) Veröffentlichungstag der Patentschrift:
**24.10.84**

(21) Anmeldenummer: **80105014.7**

(22) Anmeldetag: **23.08.80**

(51) Int. Cl.³: **H 03 K 13/24,** H 04 L 25/49,
H 04 L 3/00, H 04 B 9/00

(54) **Verfahren zum Übertragen von Digitalsignalen mittels Signalgeber.**

(30) Priorität: **03.11.79 DE 2944459**

(43) Veröffentlichungstag der Anmeldung:
**13.05.81 Patentblatt 81/19**

(45) Bekanntmachung des Hinweises auf die Patenterteilung:
**24.10.84 Patentblatt 84/43**

(84) Benannte Vertragsstaaten:
**AT BE CH FR GB IT LI LU NL SE**

(56) Entgegenhaltungen:
**EP - A - 0 013 990**
**EP - A - 0 018 142**
**DE - A - 2 529 448**
**DE - A - 2 624 101**
**DE - A - 2 656 054**
**DE - A - 2 844 293**

(73) Patentinhaber: **ANT Nachrichtentechnik GmbH,
Gerberstrasse 33, D-7150 Backnang (DE)**

(72) Erfinder: **Stach, Ralf Michael, Ing. grad.,
Kelterstrasse 27/1, D-7151 Auenwald 2 (DE)**

(74) Vertreter: **Schickle, Gerhard, Dipl.-Ing., ANT
Nachrichtentechnik GmbH Patent- und Lizenzabteilung
Gerberstrasse 33, D-7150 Backnang (DE)**

**Beschreibung**

Die Erfindung betrifft ein Verfahren zum Übertragen von Digitalsignalen gemäss dem Oberbegriff des Patentanspruches 1.

Die einfachste Form der Digitalsignalübertragung ist die nichtcodierte Binärsignalübertragung. Nachteilig bei dieser Art der Übertragung ist der unzureichende Zeitinformationsgehalt, d.h. ein Synchronisieren des Signalempfängers bei längeren Gleichlagen ist nicht möglich. Eine Überwachung der Signale auf Fehler kann auch nicht erfolgen, da keine Codiergesetzmässigkeit vorliegt, die überprüfbar wäre.

Oft ist gefordert, zur Übertragung einen Bipolarcode zu verwenden, z.B. bei Schnittstellen in PCM-Netzen, nach CCITT G.703 der HDB3-Code.

Ein Bipolarcode ist weniger störungsanfällig, da er keine Gleichstromkomponente enthält. Bei der Digitalsignalübertragung mittels optischer Fasern kann der Signalgeber bekanntlich nur Amplitudenwerte gleicher Polarität übertragen. Es wäre nun denkbar, dem Bipolarcode einen so hohen Gleichstromanteil zu unterlagern, dass die negativen und positiven Signalanteile des Bipolarcodes beide in Bezug auf den Pegel 0 dasselbe Vorzeichen hätten, d.. Amplitudenwerte gleicher Polarität. Das aber würde bedeuten, dass die Leistungsdichte stark anstiege. Zur Fehlerkorrektur und Taktrückgewinnung bedient man sich vorzugsweise eines HDBn- oder CHDBn-Codes.

Aus der DE-OS 2 844 293 ist ein Verfahren und System der Modulation und Demodulation zur Digitalsignalübertragung bekannt, bei dem das zu übertragende Digitalsignal nach einem Code codiert wird, der drei zeitlich verschiedene, innerhalb einer Signalperiode T liegende Signalbilder verwendet, die man durch Modulieren von Impulsen eines Trägers sowohl nach der Amplitude als auch nach der Stellung (Pulsamplituden-Pulspositionsmodulation) erhält. Bei der Pulsamplitudenmodulation dieses Systems werden die Binärwerte 0 und 1 durch Impulsamplituden verschiedener Höhe, nämlich der Grösse «A» und «B» dargestellt. Ein optischer Signalgeber wird hier mit diesen Impulsamplituden moduliert. Bei diesem Verfahren ist ein beträchtlicher Schaltungsaufwand zur Codierung und Modulation nötig. Ausserdem ist in einer Entscheidungsschaltung festzustellen, welches der drei Signalbilder übertragen wurde. Bei hoher Datenübertragungsgeschwindigkeit und langen Übertragungswegen können Laufzeitfehler und damit verbundene falsche Abtastwerte bei der Decodierung auftreten.

Aus der DE-PS 2 624 101 ist ein Decodierverfahren für einen HDBn-Decoder bekannt, bei dem eine empfangene Impulsfolge im HDBn-Code zunächst in eine unipolare Impulsfolge für alle positiven Übertragungsimpulse und in eine zweite unipolare Impulsfolge für alle negativen Übertragungsimpulse umgewandelt wird. Die Umwandlung in diese zwei Impulsfolgen dient hier nur dazu, diese auf eingesetzte Impulse nach der HDBn-Regel zu untersuchen und eine Überwachung von Übertragungsstrecke und Decoder durch Bipolaritätsprüfung vorzunehmen. Eine in bipolarer Form vorliegende Impulsfolge (Doppelstromimpulsfolge) wird hier in eine erste unipolare Impulsfolge für alle positiven und in eine zweite unipolare Impulsfolge für alle negativen Übertragungsimpulse umgewandelt. Ein Hinweis auf eine Digitalsignalübertragung unter Aufbereitung dieser unipolaren Impulsfolgen sowie hinsichtlich eines leistungssparenden Übertragungsverfahrens wird in der DE-PS 2 624 101 nicht gegeben.

Aus der DE-OS 2 845 828 ist ein Verfahren zur Übertragung von Binärfolgen bekannt, wobei jedes Bit eines ersten Wertes durch ein Signalelement eines ersten Pegels während der ersten Hälfte einer Bittaktdauer und daran anschliessend durch ein Signalelement eines zweiten, vom ersten deutlich unterschiedlichen Pegels während der zweiten Hälfte dieser Bittaktdauer dargestellt wird. Auch hier ist eine aufwendige Codier- und Decodiervorrichtung nötig. Durch die Taktabhängigkeit der Umcodierung können zusätzliche Fehler auftreten.

Aufgabe der Erfindung eingangs genannter Art ist es, ausgehend von der DE-PS 2 624 101 ein Verfahren zum Übertragen von Digitalsignalen anzugeben, das mit geringerer Übertragungsleistung und mit einfacheren Codier- und Decodiereinrichtungen auskommt, sowie einfache Schaltungsanordnungen zum Durchführen dieses Verfahrens anzugeben.

Diese Aufgabe wird bezüglich des Verfahrens erfindungsgemäss durch die kennzeichnenden Merkmale des Patentanspruchs 1 gelöst und bezüglich der Schaltungsanordnungen durch die Merkmale der Patentansprüche 5 oder 6.

Die Ansprüche 2, 3 und 4 geben vorteilhafte Weiterbildungen des erfindungsgemässen Verfahrens an.

Das erfindungsgemässe Verfahren eignet sich besonders gut zur Digitalsignalübertragung mittels optischer Faser, könnte aber auch zur Übertragung von akustischen oder anderen physikalischen Grössen angewendet werden.

Anhand der Zeichnungen werden nun Ausführungsformen der Erfindung näher erläutert. Dabei zeigt

Fig. 1 ein Prinzipschaltbild einer Schaltungsanordnung unter Verwendung des erfindungsgemässen Verfahrens,

Fig. 2 den zeitlichen Stromverlauf der umcodierten Impulsfolge bei Anwendung der Schaltungsanordnung nach Fig. 1,

Fig. 3 eine andere Ausführungsform der Schaltungsanordnung nach dem erfindungsgemässen Verfahren,

Fig. 4 den zeitlichen Stromverlauf der umcodierten Impulsfolgen bei Anwendung der Schaltungsanordnung nach Fig. 3 und

Fig. 5 eine Decodiereinrichtung.

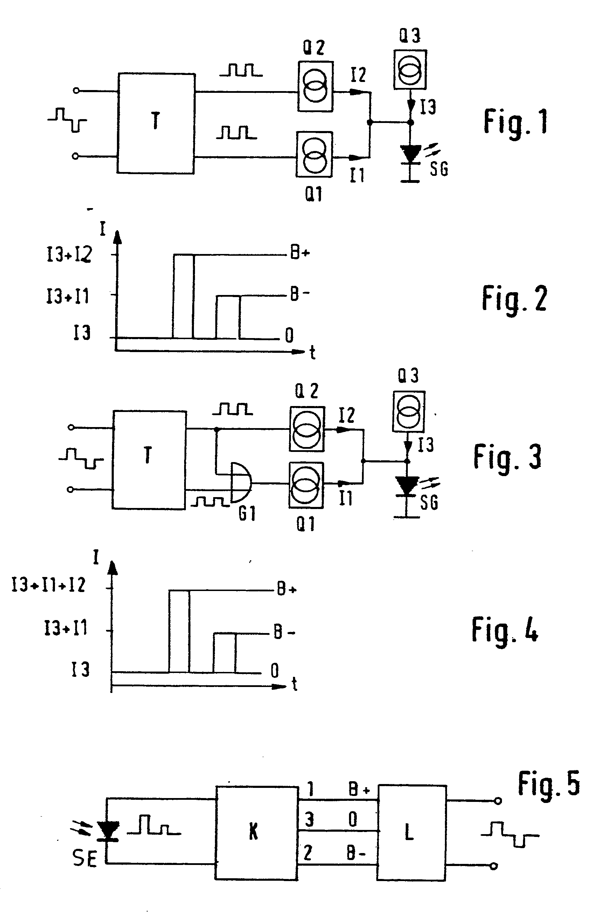

In Fig. 1 wird eine Doppelstromimpulsfolge, z.B. im HDB3-Code, zunächst in eine erste und zweite unipolare Impulsfolge mittels Impulstrennstufe T umgewandelt. Die Impulstrennstufe T kann dabei als sekundärseitig geerdeter Übertrager, wie z.B. beim Gegenstand der DE-OS 2 845 828, ausgebildet sein oder aus einer logischen Verknüpfungsschaltung bestehen. An den beiden Ausgängen von T steht dann eine erste unipolare Impulsfolge für alle positiven Übertragungsimpule und eine zweite unipolare Impulsfolge für alle negativen Übertragungsimpulse für die Umcodierung zur Verfügung. Die erste unipolare Impulsfolge steuert eine erste Stromquelle Q2, die einen zu dieser Impulsfolge proportionalen Strom I2 erzeugt. Die zweite unipolare Impulsfolge steuert eine zweite Stromquelle Q1, die einen zur zweiten unipolaren Impulsfolge proportionalen Strom I1 erzeugt. Dabei werden die beiden Stromquellen Q1 und Q2 so zueinander eingestellt, dass der Strom I1 halb so gross ist wie der Strom I2. Der Strom I2 steuert den Signalgeber SG für jene Zeit an, während der die positiven Impulse der Doppelstromimpulse auftreten; d.h. ein Ansteuerimpuls aus der Stromquelle Q2 für den Signalgeber SG tritt also jeweils gleichphasig zu einem positiven Impuls der Doppelstromimpulsfolge auf (Fig. 2). Entsprechend wird der Signalgeber SG von einem Strom I1 aus der Stromquelle Q1 angesteuert, wenn ein negativer Impuls der Doppelstromimpulsfolge auftritt. Der Signalgeber SG besteht beim hier angegebenen Ausführungsbeispiel der Erfindung aus einer optischen Sendeeinrichtung (Laserdiode, LED).

Zum optimalen Betrieb der optischen Sendeeinrichtung ist es zweckmässig, einen geringen Gleichstromanteil I3 mittels der Stromquelle Q3 zu unterlagern. Damit kann gewährleistet werden, dass die optische Sendeeinrichtung im linearen Bereich ihrer Kennlinie und bei Rauschminimum arbeitet.

Fig. 2 zeigt den zeitlichen Stromverlauf der umcodierten Impulsfolgen bei Anwendung der Schaltungsanordnung nach Fig. 1. Mit I3 wird der Nullpegel verschoben. Es ist ersichtlich, dass die erste Sendeamplitude B+ doppelt so hoch ist wie die zweite Sendeamplitude B−.

Fig. 3 zeigt eine andere Schaltungsanordnung. Die Doppelstromimpulsfolge wird wie zuvor mittels der Impulstrennstufe T in die zwei unipolaren Impulsfolgen umgewandelt. Die erste unipolare Impulsfolge steuert die erste Stromquelle Q2. Die zweite Stromquelle Q1 wird durch das Ausgangssignal eines ODER-Gatters G1 gesteuert, an dessen Eingängen die Signale beider unipolarer Impulsfolgen anliegen. Die Stromquellen Q1 und Q2 werden so eingestellt, dass ihre Ausgangsströme I1 und I2 gleich gross sind. Die unipolaren Impulse treten wieder gleichphasig mit den entsprechenden positiven oder negativen Impulsen der Doppelstromimpulsfolge auf. Bei Auftreten eines positiven Impulses der Doppelstromimpulsfolge wird sowohl ein Strom I2 als auch über das ODER-Gatter G1 ein Strom I1 erzeugt. Diese Ströme treten gleichzeitig auf und werden addiert (I1 + I2 Anteil von B+ in Fig. 4). Ihre Summe dient als Steuerimpuls für den Signalgeber SG. Bei Auftreten eines negativen Impulses der Doppelstromimpulsfolge wird über das ODER-Gatter G1 nur ein Strom I1 erzeugt. Der Signalgeber SG erhält also nur einen Steuerimpuls der Höhe des Stromes I1

(I1 Anteil von B− in Fig. 4). Falls erforderlich, kann wieder ein geringer Gleichstromanteil I3 unterlagert werden.

Den zeitlichen Stromverlauf der umcodierten Impulsfolgen bei Anwendung dieser Schaltungsanordnung zeigt Fig. 4. Die positive Sendeamplitude B+ setzt sich hier aus der Summe der Ströme I3, I1 und I2 zusammen, wohingegen nach Fig. 2 B+ die Summe der Ströme aus I3 und I2 bildet. Die negative Sendeamplitude B− ist bei Fig. 2 wie auch bei Fig. 4 durch die Summe der Ströme I3 und I1 gegeben.

Fig. 5 zeigt eine vorteilhafte Decodiereinrichtung zur Rückgewinnung der Doppelstromimpulsfolgen in ihrer ursprünglichen Form am Ende der optischen Übertragungsstrecke. Ein Signalempfänger SE ist mit einem Schwellwertkomparator K verbunden. Dieser liefert an einem Ausgang 1 ein Signal, sobald ¾ des Wertes des höchsten Empfangspegels überschritten sind. Diese Schwellwertstufe ¾ Is entspricht dem Pegel B+. Am Ausgang 2 des Schwellwertkomparators K erscheint ein Signal, wenn ¼ des Wertes des höchsten Empfangspegels überschritten, aber ¾ desselben noch nicht erreicht ist. Dies entspricht dem Pegel B−. Am Ausgang 3 von K steht in allen anderen Fällen, d.h. Unterschreiten von ¼ Is, ein Signal, das dem Nullpegel entspricht. In einer Auswertelogik L, die auf verschiedene Art aus einfachen Digitalbausteinen realisiert werden kann, wird das ursprüngliche Bipolarsignal wieder synthetisiert.

Aus nachfolgender Leistungsbilanz ist die Einsparung an Übertragungsleistung ersichtlich. Legt man eine Verteilung von jeweils 50% für eine logische 1 bzw. 0 zugrunde, so ergibt sich bei den gebräuchlichen Codes HDB-3, AMI usw. folgende Zuordnung

50% «O» → Pm (mittlere Leistung)
25% «B+» → Ps (Spitzenleistung)
25% «B−» → Po (Leistung 0)
Daraus ergibt sich

für $Pm = \dfrac{Ps+Po}{2}$ und für die zu übertragende Leistung

$$P^2 = \frac{Pm}{2} + \frac{Ps}{4} + \frac{Po}{4}$$
$$= \frac{Pm}{2} + \frac{1}{2} \quad \frac{Ps+Po}{2}$$
$$= Pm,$$

d.h. es muss immer die Pm entsprechende Leistung übertragen werden. Der Doppelstromimpulsfolge wird also ein Gleichstromsignal mit der Leistung Pm unterlagert.

Wählt man die erfindungsgemässe Zuordnung:
50% «O» → Po (Leistung 0)
25% «B+» → Ps (Spitzenleistung)
25% «B−» → Pm (mittlere Leistung)
so ergibt sich die zu übertragende Leistung

$$P' = \frac{Po}{2} + \frac{Ps}{4} + \frac{Pm}{4}$$
$$= \frac{Po}{2} + \frac{1}{2} \quad \frac{Ps+Po}{2} + \frac{Pm}{4}$$
$$= \frac{Po}{4} + \frac{3}{4} \quad Pm$$

Die Leistungsersparnis ΔP ist also:

$$\Delta P = P - P' = \frac{1}{4}Pm - \frac{1}{4}Po$$

Durch die Verringerung der Impulsbreite, die bei der Leistungsbilanz konstant angenommen wurde, lässt sich die zu übertragende Leistung noch weiter verringern.

Zur Systemoptimierung bei optischer Übertragung ist es zweckmässig, jene zwischen dem höchsten Pegel und dem Nullpegel liegende übertragene Sendeamplitude, in den ausgeführten Schaltungsbeispielen gemäss Fig. 2 und 4 ist das die Sendeamplitude B−, etwas kleiner als halb so gross wie die höchste Sendeamplitude, hier B+, zu wählen. Der Grund für diese vorgenommene Verschiebung des Pegels der Sendeamplitude B− liegt in der störenden Verbreiterung des Energiespektrums der übertragenen Signale durch das Rauschen der optischen Empfangseinrichtung − Photodiode − in Abhängigkeit der eintreffenden Lichtleistung. Bei elektrischen Signalen tritt diese Verbreiterung des Spektrums nicht ein. Die Fehlerwahrscheinlichkeit wird durch diese Systemoptimierung beträchtlich reduziert.

Auf der Empfangsseite müssen die Schwellwertstufen des Schwellwertkomparators K natürlich diesen veränderten Pegeln der Sendeamplituden angepasst werden.

## Patentansprüche

1. Verfahren zum Übertragen von Digitalsignalen mittels Signalgeber, wobei eine Doppelstromimpulsfolge vor dem Übertragen in eine erste unipolare Impulsfolge für alle positiven Übertragungsimpulse und in eine zweite unipolare Impulsfolge gleicher Polarität für alle negativen Übertragungsimpulse umgewandelt wird, dadurch gekennzeichnet, dass die Impulsfolgen so umcodiert werden, dass allen positiven Übertragungsimpulsen eine erste Sendeamplitude (B+) und allen negativen Übertragungsimpulsen eine zweite, von der ersten abweichenden Sendeamplitude (B−) zugeordnet wird und dass der Signalgeber (SG) mit jeweils einer der so umcodierten Impulsfolgen gleichphasig mit den entsprechenden positiven bzw. negativen Impulsen der Doppelstromimpulsfolge angesteuert wird.

2. Verfahren zum Übertragen von Digitalsignalen nach Anspruch 1, dadurch gekennzeichnet, dass der ersten Sendeamplitude (B+) der höchste zu übertragende Pegel zugeordnet wird.

3. Verfahren zum Übertragen von Digitalsignalen nach Anspruch 2, dadurch gekennzeichnet, dass die erste Sendeamplitude (B+) doppelt so gross wie oder grösser als die zweite Sendeamplitude (B−) gewählt wird.

4. Verfahren zum Übertragen von Digitalsignalen nach einem der vorhergehenden Ansprüche, dadurch gekennzeichnet, dass die Impulslängen der Übertragungsimpulse verkürzt werden.

5. Schaltungsanordnung zum Durchführen des Verfahrens nach Anspruch 1 oder 4, dadurch gekennzeichnet, dass eine Einrichtung zum Umwandeln der Doppelstromimpulsfolge in eine erste und eine zweite unipolare Impulsfolge verwendet wird, dass die erste unipolare Impulsfolge an den Eingang einer ersten Stromquelle (Q2) geführt ist, die einen Strom erzeugt, dass die zweite unipolare Impulsfolge an den Eingang einer zweiten Stromquelle (Q1) geführt ist, die einen zweiten Strom (I1) erzeugt, dass der zweite Strom (I1) halb so gross ist wie der erste Strom (I2) und dass die Ausgänge beider Stromquellen (Q1, Q2) mit dem Steuereingang des Signalgebers (SG) verbunden sind.

6. Schaltungsanordnung zum Durchführen des Verfahrens nach Anspruch 1 oder 4, dadurch gekennzeichnet, dass eine Einrichtung zum Umwandeln der Doppelstromimpulse in eine erste und zweite unipolare Impulsfolge verwendet wird, dass die erste unipolare Impulsfolge an den Eingang einer ersten Stromquelle (Q2) geführt ist, die einen ersten Strom (I2) erzeugt, dass die erste und die zweite unipolare Impulsfolge jeweils an einen Eingang eines ODER-Gatters geführt sind, dass der Ausgang des ODER-Gatters (G1) mit dem Eingang einer zweiten Stromquelle (Q1) verbunden ist, die einen zweiten Strom (I1) erzeugt, dass der erste (I2) und der zweite Strom (I1) gleiche Grösse haben, und dass die Ausgänge beider Stromquellen (Q1, Q2) mit dem Steuereingang des Signalgebers (SG) verbunden sind.

## Claims

1. Method für the transmission of digital signals by means of signal transmitter, wherein a double current pulse sequence is converted before the transmission into a first unipolar pulse sequence for all positive transmission pulses and into a second unipolar pulse sequence of like polarity for all negative transmission pulses, characterised thereby, that the pulse sequences are so recoded that a first transmission amplitude (B+) is associated with all positive transmission pulses and a second transmission amplitude (B−), differing from the first, is associated with all negative transmission pulses and that the signal transmitter (SG) is driven each time by one of the thus recoded pulse sequences in equal phase with the corresponding positive or negative pulses of the double current pulse sequence.

2. Method for the transmission of digital signals according to claim 1, characterised thereby, that the highest level to be transmitted is associated with the first transmission amplitude (B+).

3. Method for the transmission of digital signals according to claim 2, characterised thereby, that the first transmission amplitude (B+) is chosen to be twice as great or greater than the second transmission amplitude (B−).

4. Method for the transmission of digital signals according to one of the preceding claims characterised thereby, that the pulse lengths of the transmission pulses are shortened.

5. Circuit arrangement for the performance of the method according to claim 1 or 4, characterised thereby, that an equipment for the conversion of the double current pulse sequence into a first and a second unipolar pulse sequence is employed, that the first unipolar pulse sequence is conducted to the input of a first current source (Q2), which generates one current, that the second unipolar pulse sequence is conducted to the input of a second current source (Q1), which generates a second current (I1), that the second current (I1) is half as great as the first current (I2) and that the outputs of both current sources (Q1, Q2) are connected with the control input of the signal transmitter (SG).

6. Circuit arrangement for the performance of the method according to claim 1 or 4, characterised thereby, that an equipment for the conversion of the double current pulse sequence into a first and a second unipolar pulse sequence is employed, that the first unipolar pulse sequence is conducted to the input of a first current source (Q2), which generates a first current (I2), that the first and the second unipolar pulse sequence are each conducted to a respective input of an OR-gate, that the output of the OR-gate (G1) is connected with the input of a second current source (Q1), which generates a second current (I1), that the first (I2) and the second (I1) current have equal magnitude and that the outputs of both current sources (Q1, Q2) are connected with the control input of the signal transmitter (SG).

**Revendications**

1. Procédé pour la transmission de signaux numériques au moyen d'un générateur de signaux, dans lequel une série d'impulsions en double courant est convertie avant la transmission en une première série d'impulsions unipolaires pour toutes les impulsions transmises positives et une seconde série d'impulsions unipolaires de même polarité pour toutes les impulsions transmises négatives, ledit procédé étant caractérisé en ce que les séries d'impulsions sont transcodées de façon à affecter toutes les impulsions transmises positives à une première amplitude d'émission (B+) et toutes les impulsions transmises négatives à une seconde amplitude d'émission (B−) différant de la première; et le générateur de signaux (SG) est commandé par une des séries d'impulsions ainsi transcodées, en phase avec les impulsions positives ou négatives correspondantes de la série d'impulsions en double courant.

2. Procédé pour la transmission de signaux numériques selon revendication 1, caractérisé en ce que la première amplitude d'émission (B+) est affectée au niveau maximal à transmettre.

3. Procédé pour la transmission de signaux numériques selon revendication 2, caractérisé en ce que la première amplitude d'émission (B+) est choisie double ou supérieure à la seconde amplitude d'émission (B−).

4. Procédé pour la transmission de signaux numériques selon une quelconque des revendications 1 à 4, caractérisé par une diminution de la durée des impulsions transmises.

5. Circuit pour la mise en œuvre du procédé selon une des revendications 1 ou 4, caractérisé en ce qu'un dispositif est utilisé pour convertir la série d'impulsions en double courant en une première et une seconde série d'impulsions unipolaires; la première série d'impulsions unipolaires est appliquée à l'entrée d'une première source de courant (Q2), qui délivre un courant; la seconde série d'impulsions unipolaires est appliquée à l'entrée d'une seconde source de courant (Q1), qui délivre un deuxième courant (I1); le deuxième courant (I1) est égal à la moitié du premier courant (I2); et les sorties des deux sources de courant (Q1, Q2) sont reliées à l'entrée de commande du générateur de signaux (SG).

6. Circuit pour la mise en œuvre du procédé selon une des revendications 1 ou 4, caractérisé en ce qu'un dispositif est utilisé pour convertir les impulsions en double courant en une première et une seconde série d'impulsions unipolaires; la première série d'impulsions unipolaires est appliquée à l'entrée d'une première source de courant (Q2), qui délivre un premier courant (I2); la première et la seconde série d'impulsions unipolaires sont appliquées chacune à une entrée d'un opérateur OU; la sortie de l'opérateur OU (G1) est reliée à l'entrée d'une deuxième source de courant (Q1), qui délivre un deuxième courant (I1); le premier courant (I2) et le deuxième (I1) sont égaux; et les sorties des deux sources de courant (Q1, Q2) sont reliées à l'entrée de commande du générateur de signaux (SG).

Fig. 1

Fig. 2

Fig. 3

Fig. 4

Fig. 5